# EUROPÄISCHE PATENTSCHRIFT

(11) **EP 2 366 596 B1**
(45) Veröffentlichungstag und Bekanntmachung des Hinweises auf die Patenterteilung: **18.09.2013**
(21) Anmeldenummer: 11154922.6
(22) Anmeldetag: 18.02.2011
(51) Int. Cl.: B60T 11/22, B60T 11/26, B60T 17/22, B62L 3/02

(54) **Bremsflüssigkeitsreservoir, insbesondere für Motorräder**
Brake fluid reservoir, in particular for motorcycles
Réservoir pour liquide de freinage, notamment pour motos

(30) Priorität: 05.03.2010 DE 102010010412
(43) Veröffentlichungstag der Anmeldung: 21.09.2011
(73) Patentinhaber: Bayerische Motoren Werke Aktiengesellschaft, 80809 München (DE)
(72) Erfinder: Seidl, Josef, 84130, Dingolfing (DE); Damoser, Christoph, 80992, Muenchen (DE); Krauss, Sebastian, 81541, Muenchen (DE)

(56) Entgegenhaltungen:
- DE-A1- 3 744 010
- DE-A1-102004 041 268
- GB-A- 2 353 341
- US-A- 5 586 436
- US-A- 5 752 746
- US-A1- 2003 062 371
- US-B1- 6 360 540

## Beschreibung

Die vorliegende Erfindung betrifft ein Bremsflüssigkeitsreservoir, insbesondere für Motorräder, gemäß dem Oberbegriff des Patentanspruches 1.

Ein derartiges Bremsflüssigkeitsreservoir ist aus der GB 2 353 341 A bekannt. Zum technischen Hintergrund der vorliegenden Erfindung zählen die DE 10 2004 041 268 A1, DE 37 44 010 A1, US 6 360 540 B1, US 2003/0062371 A1, US 5 685 436 A1 sowie die US 5 752 746 A.

Bei Motorrädern ist der Bremsflüssigkeitsbehälter, der im Folgenden auch als "Bremsflüssigkeitsreservoir" bezeichnet wird, üblicherweise am Lenker befestigt und damit beträchtlichen Vibrationen ausgesetzt. Dadurch besteht die Gefahr, dass sich im Bremsflüssigkeitsbehälter Luft- und Bremsflüssigkeit vermischen, was zum Aufschäumen der Bremsflüssigkeit führen kann. Dies gilt es zuverlässig zu verhindern, um eine einwandfreie Funktion der Bremshydraulik sicherzustellen.

Hierzu wurde bereits erwogen, in den Bremsflüssigkeitsbehälter ein poröses bzw. aus einem Kunststoffschaum hergestelltes Element einzusetzen. Die bislang bekannten "Einsätze" sind nicht dauerhaft bremsflüssigkeitsresistent und müssen daher beim Wechseln der Bremsflüssigkeit ausgetauscht werden. Einsätze aus beständigeren Werkstoffen weisen eine größere Steifigkeit auf, was wiederum den Nachteil hat, dass beim Absinken der Bremsflüssigkeit im Bremsflüssigkeitsbehälter der "Einsatz" eine entsprechende Bewegung des oberhalb des Einsatzes angeordneten Faltenbalgs hemmt. Dies wiederum führt dazu, dass sich im Hydrauliksystem ein Unterdruck aufbauen kann, was zum "Zurückziehen" der Bremskolben führen kann.

Aufgabe der Erfindung ist es, ein Bremsflüssigkeitsreservoir zu schaffen, das
a) auch bei einem Absinken des Bremsflüssigkeitsspiegels im Bremsflüssigkeitsreservoir eine einwandfreie Funktion der Bremshydraulik ermöglicht und das
b) eine Schaumbildung in Folge von Vibrationen zuverlässig verhindert.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Bremsflüssigkeitsreservoir bzw. ein Bremsflüssigkeitsbehälter, insbesondere für Motorräder, mit einem Gehäuse, das durch ein Gehäuseunterteil und einen darauf aufgeschraubten Gehäusedeckel gebildet sein kann. Das Gehäuseunterteil und der Gehäusedeckel können aus einem im Wesentlichen steifen Material hergestellt sein. Das Gehäuseunterteil wird durch ein "Trenneiement", welches in dem Gehäuse(-unterteil) angeordnet ist, in eine "untere Gehäusekammer", die mit Bremsflüssigkeit gefüllt ist und eine primär mit Luft gefüllte "obere Gehäusekammer" unterteilt. Die untere, mit Bremsflüssigkeit gefüllte Gehäusekammer kann über einen entsprechenden Fluidanschluss an ein Hydrauliksystem einer Bremshydraulik eines Motorrads angeschlossen sein.

Der Kern der Erfindung besteht darin, dass das Bremsflüssigkeitsreservoir ein "ventiiartiges Element" aufweist, welches
a) im Falle eines in der unteren Gehäusekammer herrschenden Unterdrucks ein Nachströmen von Luft aus der oberen Gehäusekammer in die untere Gehäusekammer ermöglicht und
b) einen Übertritt von Bremsflüssigkeit aus der unteren Gehäusekammer in die obere Gehäusekammer verhindert.

Vorzugsweise ist in der unteren Gehäusekammer ein gitterartig strukturierter Körper angeordnet und in die dort befindliche Bremsflüssigkeit eingetaucht.

Der Begriff "gitterartig strukturierter Körper" ist äußerst breit auszulegen. Hierunter subsumierbar sollen u.a. sein
- aus einzelnen bzw. einer Vielzahl von Drähten bestehende Gebilde,
- "schaumartige Gebilde" bzw.
- ganz allgemein gesprochen "poröse Körper",
welche eine Schaumbildung verhindern. Vorzugsweise handelt es sich bei dem betreffenden Material um ein Material, das dauerhaft resistent gegenüber Bremsflüssigkeit ist, so dass der gitterartig strukturierte Körper nicht regelmäßig ausgetauscht werden muss, sondern möglichst über die gesamte Lebensdauer des Fahrzeugs Bestand hat.

Das "Trennelement" kann als Scheibe ausgebildet sein, die im Wesentlichen in horizontaler Richtung in das Gehäuse des Bremsflüssigkeitsreservoirs eingesetzt ist. Vorzugsweise handelt es sich bei der Scheibe um eine biegeelastische Scheibe aus einem bremsflüssigkeitsresistenten Kunststoffmaterial. Wenn das Material des Trennelements biegeelastisch ist, kann es eine Volumenänderung der Bremsflüssigkeit bei Erwärmen oder Abkühlen der Bremsflüssigkeit ausgleichen. Bei hochbiegeelastischen Materialen kann auch bereits ein geringes Absinken des Bremsflüssigkeitspegels kompensiert werden, ohne dass Luft von der oberen Gehäusekammer in die untere Gehäusekammer "nachströmen" muss.

Nach einer Weiterbildung der Erfindung ist das ventilartige Element in dem Trennelement bzw. in der als Trennelement fungierenden Scheibe vorgesehen.

Oberhalb des Trennelements kann ein "aufsaugendes Element", z. B. ein schwammartiges Gebilde o.ä. angeordnet sein. Für den Fall, dass doch eine gewisse Menge Bremsflüssigkeit aus der unteren Gehäusekammer in die obere Gehäusekammer gelangt, was z.B. beim Umfallen des Motorrads auftreten kann, wird diese von dem aufsaugenden Element aufgenommen.

Hinsichtlich der Ausgestaltung des ventilartigen Elements gibt es eine Vielzahl von Möglichkeiten. Bei einer ersten Ausführungsform ist in dem Trennelement ein einfacher Fluiddurchgang vorgesehen, der einen Ventilsitz bildet. Der Ventilsitz wirkt mit einem Ventilkörper zusammen, der von der Seite der oberen Gehäusekammer her auf dem Ventilsitz aufsitzt.

Alternativ dazu kann, im Falle eines scheibenartig ausgebildeten Trennelements, in dem Trennelement auch eine Schlitzung vorgesehen sein, die aus einem einzigen oder aus mehreren Schlitzen bestehen kann. Der Schlitz bzw. die Schlitze sind vorzugsweise so ausgebildet, dass sie grundsätzlich "geschlossen" sind, d. h. einen Übertritt von Bremsflüssigkeit von der unteren Gehäusekammer in die obere Gehäusekammer verhindert bzw. behindern. Aufgrund der Elastizität des Trennelements ist jedoch sichergestellt, dass bei einem in der unteren Gehäusekammer auftretenden Unterdruck, z.B. in Folge eines Absinkens des Bremsflüssigkeitspegels, Luft von der oberen Gehäusekammer in die untere Gehäusekammer nachströmen kann und somit eine größere Unterdruckbildung vermieden bzw. auf ein Minimum reduziert wird.

Bei einer anderen Ausführungsform ist das ventilartige Element durch einen in dem Trennelement vorgesehenen Durchgang und einen biegeelastischen Lappen gebildet, der von der Seite der unteren Gehäusekammer her an dem Trennelement anliegt ist und den Durchgang nach oben hin verschließt. Aufgrund seiner Biegeelastizität ermöglicht der Lappen aber im Falle eines in der unteren Gehäusekammer entstehenden Unterdrucks ein Nachströmen von Luft von der oberen Gehäusekammer in die untere Gehäusekammer.

Eine weitere Ausgestaltungsmöglichkeit des ventilartigen Elements besteht in einem zylindrischen Element, das an der Unterseite des Trennelements angeordnet ist und in die untere Gehäusekammer ragt. Um ein Nachströmen von Luft von der oberen Gehäusekammer in die untere Gehäusekammer zu ermöglichen, können z. B. radiale Durchgangsöffnungen vorgesehen sein, welche ein Nachströmen von Luft von der oberen Gehäusekammer in die untere Gehäusekammer ermöglichen, eine umgekehrte Strömung von Bremsflüssigkeit jedoch verhindern.

Im Folgenden wird die Erfindung im Zusammenhang mit der Zeichnung näher erläutert. Es zeigen:
- Figur 1: eine Schnittdarstellung eines Bremsflüssigkeitsreservoirs gemäß der Erfindung;
- Figur 2a, 2b: Ausführungsbeispiele eines ventilartigen Elements,
- Figuren 3a-3d: verschiedene Schlitzungsvarianten zur Darstellung eines ventilartigen Elements.

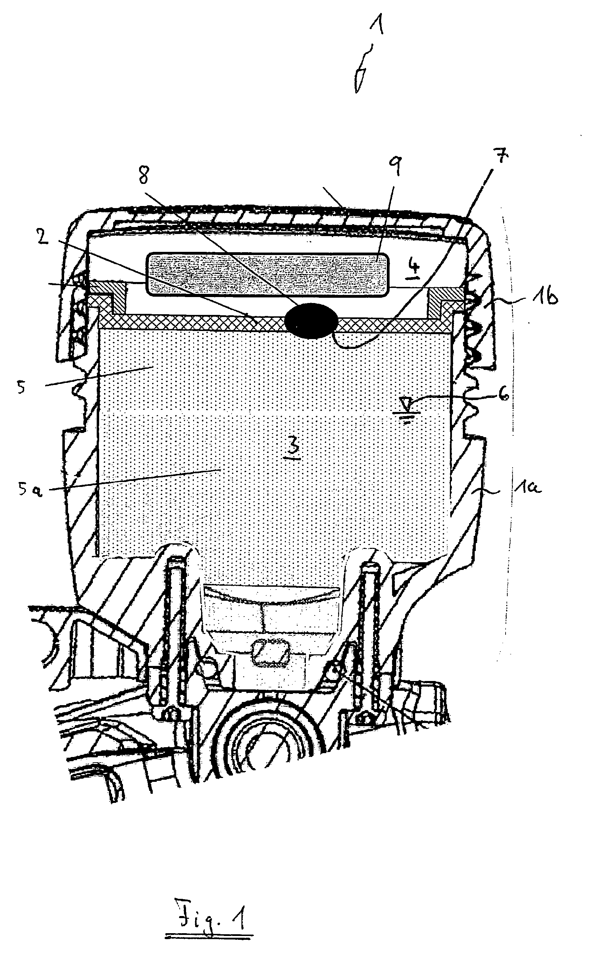

Figur 1 zeigt einen Bremsflüssigkeitsbehälter 1 für Motorräder bestehend aus einem im Wesentlichen steifen Gehäuseunterteil 1a und einem darauf aufgeschraubten Gehäusedeckel 1b. Im Gehäuse des Bremsflüssigkeitsbehälters 1 ist eine aus einem elastischen Material hergestellte Trennscheibe 2 angeordnet, welche das Gehäuse in eine untere Gehäusekammer 3 und eine obere Gehäusekammer 4 unterteilt. Die untere Gehäusekammer 3 ist mit Bremsflüssigkeit befüllt. Ferner ist in die untere Gehäusekammer 3 ein "Gittereinleger" 5 eingesetzt. Ein unterer Bereich 5a des Gittereinlegers 5 ist in die Bremsflüssigkeit eingetaucht, wobei der Bremsflüssigkeitspegel durch das Symbol 6 angedeutet ist.

Die elastische Trennscheibe 2 weist eine Durchgangsöffnung 7 auf, welche einen "Ventilsitz" für einen Ventilkörper 8 bildet, der hier ellipsoid förmig gestaltet ist und der von oben her, d. h. von der oberen Gehäusekammer 4 her auf dem Ventilsitz 7 aufsitzt.

Vollständigkeitshalber sei noch ein in der oberen Gehäusehälfte 4 angeordneter saugfähiger Körper 9 erwähnt. Der saugende Körper 9 kann beispielsweise aus einem Filz oder aus Silicagel hergestellt sein.

Die Trennscheibe 2 kann sich in gewissem Umfang biegen, insbesondere eine Verformung nach oben ausführen, wodurch ein Druckaufbau in der unteren Gehäusekammer 3 verhindert wird.

Sollte im Falle eines Sturzes bzw. eines Umkippens des Motorrads Bremsflüssigkeit durch das ventilartige Element 7, 8 in die obere Gehäusekammer 4 gelangen, kann es durch den saugenden Körper 9 aufgenommen werden.

Das ventilartige Element 7, 8 ermöglicht im Falle eines Unterdrucks in der unteren Gehäusekammer 3 ein Nachströmen von Luft von der oberen Gehäusekammer 4 in die untere Gehäusekammer 3. Umgekehrt verhindert das ventilartige Element 7, 8, dass Bremsflüssigkeit von der unteren Gehäusekammer 3 in die obere Gehäusekammer 4 gelangt. Der Gittereinleger 5 verhindert, dass sich in der unteren Gehäusekammer 3 aus dem Luft-Bremsflüssigkeitsgemisch ein Schaum bildet.

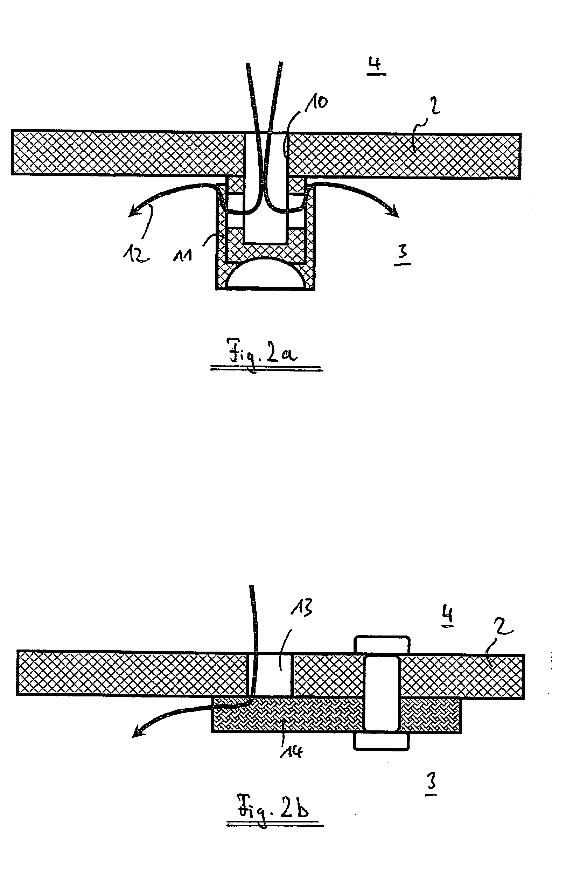

Figur 2a zeigt eine erste Variante eines ventilartigen Elements. Die Trennscheibe 2 weist hier ebenfalls eine Durchgangsbohrung auf, in die ein Rohrstück 10 eingesetzt ist. Von der unteren Gehäusekammer 3 her ist an das Rohrstück 10 ein topfförmiges elastisches Element 11 angesetzt. Im Falle eines Unterdrucks an der unteren Gehäusekammer 3 kann Luft von der oberen Gehäusekammer 4 durch das Rohrstück 10 in die untere Gehäusekammer 3 nachströmen, weil sich das topfartige Element 11 dann radial entsprechend aufweitet. Die Strömungsrichtung ist durch Pfeile 12 angedeutet. Die Komponenten 2, 10 und 11 können auch einstückig, z.B. aus Kunststoff ausgeführt sein.

Figur 2b zeigt ein Ausführungsbeispiel eines ventilartigen Elements, bei dem eine in der Trennscheibe 2 vorgesehene Durchgangsöffnung 13 von unten her durch einen biegeelastischen Lappen 14 verschlossen ist. Der Lappen 14 ist an der Unterseite Trennscheibe 2 befestigt und schmiegt sich an die Trennscheibe an. Der Lappen 14 dichtet somit nach oben hin ab und verhindert, dass Bremsflüssigkeit aus der unteren Gehäusekammer 3 in die obere Gehäusekammer 4 gelangt. Umgekehrt kann im Falle eines Unterdrucks in der unteren Gehäusekammer 3 Luft von der oberen Gehäusekammer 4 her nachströmen, da sich der Lappen 14 dann entsprechend nach unten biegt.

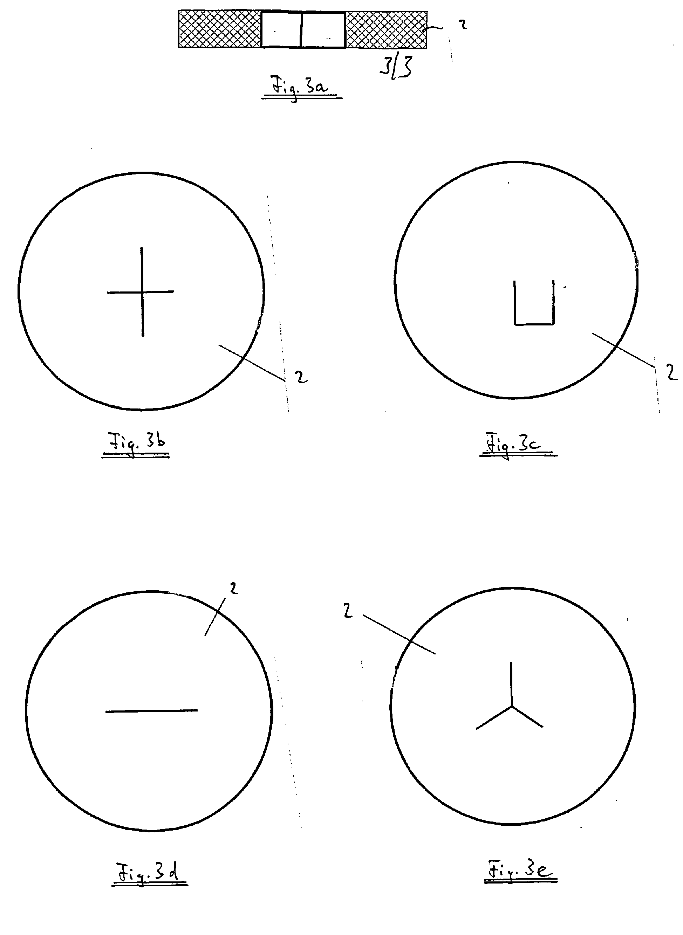

Die Figuren 3a - 3e zeigen Ausführungsbeispiele, bei denen das ventilartige Element durch einen oder mehrere Schlitze, die in der Trennscheibe 2 vorgesehen sind, gebildet ist. Beim Ausführungsbeispiel der Figur 3a liegt ein Kreuzschlitz vor. Beim Ausführungsbeispiel der Figur 3c ein U-förmiger Schlitz. Beim Ausführungsbeispiel der Figur 3d liegt ein einfacher Längsschlitz vor. Figur 3d zeichnet sich durch drei jeweils um 120° voneinander beabstandete, sternförmig angeordnete Schlitze aus.

## Patentansprüche

1. Bremsflüssigkeitsreservoir, insbesondere für Motorräder, mit
- einem Gehäuse 1a, 1b,
- einem Trennelement (2), welches in dem Gehäuse (1a, 1b) angeordnet ist und welches eine untere Gehäusekammer (3), die mit Bremsflüssigkeit gefüllt ist, von einer oberen, primär mit Luft gefüllten Gehäusekammer (4) trennt, wobei in oder an dem Trennelement ein ventilartiges Element (7, 8, 10, 11, 14) vorgesehen ist, das im Falle eines in der unteren Gehäusekammer (3) herrschenden Unterdrucks ein Nachströmen von Luft von der oberen Gehäusekammer (4) in die untere Gehäusekammer (3) ermöglicht und verhindert dass Bremsflüssigkeit von der unteren Gehäusekammer (3) in die obere Gehäusekammer (4) gelangt,
**dadurch gekennzeichnet, dass**
in der unteren Gehäusekammer (3) ein gitterartig strukturierter, dauerhaft bremsflüssigkeitsresistenter Körper (5) angeordnet und in die Bremsflüssigkeit eingetaucht ist.

2. Bremsflüssigkeitsreservoir nach Anspruch 1, **dadurch gekennzeichnet, dass** das Trennelement (2) eine Scheibe ist.

3. Bremsflüssigkeitsreservoir nach einem der Ansprüche 1 oder 2, **dadurch gekennzeichnet, dass** das Trennelement (2) biegeelastisch ist.

4. Bremsflüssigkeitsreservoir nach einem der Ansprüche 1 bis 3; **dadurch gekennzeichnet, dass** in der oberen Gehäusekammer (4) ein Flüssigkeit aufsaugendes Element (9) angeordnet ist.

5. Bremsflüssigkeitsreservoir nach einem der vorangehenden Ansprüche, **dadurch gekennzeichnet, dass** das ventilartige Element (7, 8) einen Ventilkörper (8) aufweist, der von der Seite der oberen Gehäusekammer (4) her auf einem Ventilsitz (7), bzw. einem Rand eines Fluiddurchgangs, der in dem Trennelement (2) vorgesehen ist, aufsitzt.

6. Bremsflüssigkeitsreservoir nach einem der vorangehenden Ansprüche,
**dadurch gekennzeichnet, dass** das ventilartige Element (7, 8) durch mindestens einen in dem Trennelement (2) vorgesehenen Schlitz gebildet ist, der im Falle eines in der unteren Gehäusekammer (3) herrschenden Unterdrucks ein Nachströmen von Luft von der oberen Gehäusekammer (4) in die untere Gehäusekammer (3) ermöglicht.

7. Bremsflüssigkeitsreservoir nach einem der vorangehenden Ansprüche, **dadurch gekennzeichnet, dass** das ventilartige Element (14) durch einen in dem Trennelement (2) vorgesehenen Durchgang (13) und einen biegeelastischen Lappen (14) gebildet ist, der von der Seite der unteren Gehäusekammer (3) her an dem Trennelement (2) befestigt ist und der den Durchgang (13) verschließt und der aufgrund seiner Biegeelastizität im Falle eines in der unteren Gehäusekammer (3) herrschenden Unterdrucks ein Nachströmen von Fluid von der oberen Gehäusekammer (4) in die untere Gehäusekammer (3) ermöglicht.

8. Bremsflüssigkeitsreservoir nach einem der vorangehenden Ansprüche, **dadurch gekennzeichnet, dass** ventilartige Element einen in dem Trennelement vorgesehenen Durchgang (10) und ein damit zusammenwirkendes topfartiges Element aufweist, das ein Nachströmen von Luft aus der oberen Gehäusekammer 4 in die untere Gehäusekammer (3) ermöglicht und das verhindert, dass Bremsflüssigkeit von der unteren Gehäusekammer (3) in die obere Gehäusekammer (4) gelangt.

## Claims

1. A brake fluid reservoir, especially for motorcycles, comprising
- a casing (1a, 1b) and
- a partition (2) disposed in the casing (1 a, 1 b)
and separating a bottom chamber (3) filled with brake fluid from a top chamber (4) filled mainly with air, wherein a valve-like element (7, 8, 10, 1 1 , 14) is provided in or on the partition and in the event of a negative pressure in the bottom chamber (3), provides a flow of air from the top chamber (4) into the bottom chamber (3) and prevents brake fluid in the bottom chamber (3) from entering the top chamber (4),
**characterised in that**
a lattice-like body (5) permanently resistant to brake fluid is disposed in the bottom chamber (3) and dips into the brake fluid.

2. A brake fluid reservoir according to claim 1, **characterised in that** the partition (2) is a disc.

3. A brake fluid reservoir according to claim 1 or claim 2, **characterised in that** the partition (2) is flexible.

4. A brake fluid reservoir according to any of claims 1 to 3, **characterised in that** the top chamber (4) contains a fluid-absorbing element (9).

5. A brake fluid reservoir according to any of the preceding claims, **characterised in that** the valve-like element (7, 8) comprises a valve member (8) which, from the side of the top chamber (4), rests on a valve seat (7) or an edge of a passage for fluid through the partition (2).

6. A brake fluid reservoir according to any of the preceding claims, **characterised in that** the valve-like element (7, 8) is in the form of at least
one slot in the partition (2) which, in the event of a negative pressure in the bottom chamber (3), enables air to flow from the top chamber (4) into the bottom chamber (3).

7. A brake fluid reservoir according to any of the preceding claims,
**characterised in that** the valve-like element (14) is in the form of a passage (13) through the partition (2) and a flexible flap (14) which, from
the side of the bottom chamber (3), is fastened to the partition (2) and closes the passage (13) and, on account of its flexibility, enables fluid to flow from the top chamber (4) into the bottom chamber (3) in the event of a negative pressure in the bottom chamber (3).

8. A brake fluid reservoir according to any of the preceding claims, **characterised in that** the valve-like element comprises a passage (10) through the partition and co-operating with a pot-like element which enables air to flow from the top chamber (4) into the bottom chamber (3) and prevents brake fluid in the bottom chamber (3) from entering the top chamber (4).

## Revendications

1. Réservoir de liquide de freinage, en particulier pour motos, comportant :
- un boitier (1a, 1b),
- un élément de séparation (2) qui est monté dans le boitier (1a, 1b) et sépare une chambre de boitier inférieure (3) qui est remplie de liquide de freinage d'une chambre de boitier supérieure (4) primaire qui est remplie par de l'air, dans ou sur l'élément de séparation étant monté un élément formant soupape (7, 8, 10, 11, 14) qui, en présence d'une dépression régnant dans la chambre de boitier inférieure (3) permet un écoulement d'air de la chambre de boitier supérieure (4) dans la chambre de boitier inférieure (3) et empêche que du liquide de freinage parvienne de la chambre de boitier inférieure (3) dans la chambre de boitier supérieure (4),
**caractérisé en ce que**
dans la chambre de boitier inférieure (3) est monté un corps (5) à structure en forme de grille résistant durablement au liquide de freinage plongé dans le liquide de freinage.

2. Réservoir de liquide de freinage conforme à la revendication 1,
**caractérisé en ce que**
l'élément de séparation (2) est un disque.

3. Réservoir de liquide de freinage conforme à la revendication 1 et 2,
**caractérisé en ce que**
l'élément de séparation (2) est élastique en flexion.

4. Réservoir de liquide de freinage conforme à l'une des revendications 1 à 3,
**caractérisé en ce que**
dans la chambre de boitier supérieure (4) est monté un élément (9) d'aspiration de liquide.

5. Réservoir de liquide de freinage conforme à l'une des revendications précédentes,
**caractérisé en ce que**
l'élément formant soupape (7, 8) comporte un corps de soupape (8) qui à partir de la chambre de boitier supérieure (4) s'applique sur un siège de soupape (7) ou un bord d'un passage de fluide prévu dans l'élément de séparation (2).

6. Réservoir de liquide de freinage conforme à l'une des revendications précédentes,
**caractérisé en ce que**
l'élément formant soupape (7, 8) est formé par au moins une fente prévue dans l'élément de séparation (2) qui, en présence d'une dépression régnant dans la chambre de boitier inférieure (3) permet un écoulement d'air de la chambre de boitier supérieure (4) dans la chambre de boitier inférieure (3).

7. Réservoir de liquide de freinage conforme à l'une des revendications précédentes,
**caractérisé en ce que**
l'élément formant soupape (14) est formé par un passage (13) prévu dans l'élément de séparation (2) et par une lèvre élastique en flexion (14) qui, est fixé à partir de la chambre de boitier inférieure (3) sur l'élément de séparation (2) et ferme le passage (13) et qui, en raison de son élasticité en flexion permet, en présence d'une dépression régnant dans la chambre de boitier inférieure (3) un écoulement de fluide de la chambre de boitier supérieure (4) dans la chambre de boitier inférieure (3).

8. Réservoir de liquide de freinage conforme à l'une des revendications précédentes,
**caractérisé en ce que**
l'élément formant soupape comporte un passage (10) prévu dans l'élément de séparation et un élément en forme de pot coopérant avec ce passage qui permet un écoulement d'air de la chambre de boitier supérieure (4) dans la chambre de boitier inférieure (3) et empêche que du liquide de freinage provenant de la chambre de boitier inférieure (3) pénètre dans la chambre de boitier supérieure (4).
